# EUROPÄISCHE PATENTSCHRIFT

(11) **EP 3 384 810 B1**
(45) Veröffentlichungstag und Bekanntmachung des Hinweises auf die Patenterteilung: **24.06.2020**
(21) Anmeldenummer: 18163607.7
(22) Anmeldetag: 23.03.2018
(51) Int. Cl.: A47B 96/20, B29C 65/48, B32B 21/04

(54) **VERFAHREN ZUM HERSTELLEN EINER MÖBELPLATTE**
METHOD FOR MANUFACTURE OF A FURNITURE BOARD
PROCÉDÉ DE FABRICATION DE PANNEAU POUR MEUBLE

(30) Priorität: 06.04.2017 DE 102017107433
(43) Veröffentlichungstag der Anmeldung: 10.10.2018
(73) Patentinhaber: Fritz Egger GmbH & Co. OG, 6380 St. Johann in Tirol (AT)
(72) Erfinder: Riepertinger, Manfred, 83093 Bad Endorf (DE); Gründler, Christian, 6345 Kössen (AT)
(74) Vertreter: Cohausz & Florack

(56) Entgegenhaltungen:
- DE-A1-102006 058 244
- US-A- 2 554 471
- US-A1- 2016 326 744

## Beschreibung

Die Erfindung betrifft ein Verfahren zur Herstellung einer Möbelplatte mit einer Kernlage mit einer Oberseite und einer Unterseite, mit jeweils einer mit der Oberseite und der Unterseite verbundenen, aus einem Imprägnat hergestellten Polymerschicht und mit jeweils einer mit den Polymerschichten verbundenen Decklage.

Die zuvor genannten Möbelplatten werden allgemein für stark gewichtsbelastete Anwendungen eingesetzt, insbesondere als Boden für ein Aufbewahrungsmöbel wie ein Regal oder Schrank. Die Böden sind entweder besonders lang und /oder werden regelmäßig über lange Zeiträume mit teilweise schweren Gegenständen wie Büchern oder Porzellan belastet. Daher müssen die Möbelplatten angesichts gewünschter geringer Plattendicken besondere Festigkeitseigenschaften, insbesondere ein großes Elastizitätsmodul aufweisen. Herkömmliche Möbelplatten dieser Art werden als Tischlerplatten oder als Vollholzplatten hergestellt, die diese Eigenschaften aufweisen.

Die verwendeten Begriffe Oberseite und Unterseite beziehen sich dabei auf die während der Herstellung in der Presse eingenommene horizontale Ausrichtung des Schichtaufbaus sowie auch auf die gängige Nutzung als horizontal angeordnete Einbauposition.

In den letzten Jahren wurden diese und andere Möbelplatten mehr und mehr durch Verbundplatten bestehend aus Kernlagen aus Spanplatten oder OSB-Platten (OSB - oriented strand board) ersetzt, da deren Herstellung preiswerter ist und zudem die Decklagen dieser Möbelplatten besser weiterverarbeitet werden können, insbesondere hinsichtlich der Oberflächengestaltung. Denn die Decklagen können in einfacher Weise weiter beschichtet, lackiert oder bedruckt werden.

Des Weiteren können die Decklagen bereits das fertige Dekor aufweisen, so dass eine Nachbearbeitung nicht notwendig ist. In diesem Fall ist es erforderlich, dass die Herstellung der Möbelplatte zu einer fertigen, insbesondere ebenen Oberfläche führt.

Aus dem Stand der Technik der EP 2 987 632 A1 ist eine Möbelplatte bekannt, die in einem Verfahrensschritt ausgehend von einer mittig angeordneten OSB-Platte hergestellt wird. An die Oberseite und die Unterseite der OSB-Platte werden jeweils ein kunstharzgetränktes Papier angeordnet, die zusammen mit jeweils darauf angeordneten Außenlagen in Form von dünnen Holzwerkstoffplatten verpresst werden. Daraus entsteht eine Möbelplatte mit verbesserten Festigkeitseigenschaften, ohne dass bei der Herstellung ein Klebstoff eingesetzt wird.

Problematisch bei der Herstellung der zuvor erläuterten Möbelplatten ist, dass die Decklagen selbst während des Verpressens das Medium bilden, um den Druck und vor allem die Wärmenergie auf die auszuhärtenden Imprägnate zu übertragen. Daher kommt es einerseits zu Unregelmäßigkeiten in der Polymerisierung und Aushärtung der Imprägnate und anderseits zu Veränderungen in den Decklagen aufgrund von Druck und Wärmenergie. Diese Fehler und Veränderungen führen zu nachteiligen Unregelmäßigkeiten in den Festigkeitseigenschaften. Zudem können die zu verpressenden Imprägnate mit unterschiedlichen Materialien wegen der erschwerten Energieübertragung nicht einfach untereinander ausgetauscht werden.

Die EP 1721715 A1 offenbart dagegen ein Verfahren zum Herstellen einer Möbelplatte, bei dem die Möbelplatte ausgehend vom Rohmaterial für die Kernlage, die Imprägnate und die Decklagen in einem Pressvorgang hergestellt wird. Bei diesem Herstellungsvorgang entsteht das gleiche Problem, dass die für das Polymerisieren und Aushärten der Imprägnatschichten notwendige Energie, also Druck und Wärmenergie, durch die äußeren Schichten nur indirekt übertragen werden können.

Der vorliegenden Erfindung liegt daher das technische Problem zugrunde, ein Verfahren zu deren Herstellung anzugeben, die die zuvor aufgezeigten Nachteile beheben.

Das aufgezeigte technische Problem wird durch ein Verfahren zum Herstellen einer Möbelplatte gelöst, bei dem in einem ersten Verfahrensschritt eine Kernlage mit jeweils einem auf einer Oberseite und einer Unterseite angeordneten Imprägnat verpresst wird, wodurch jeweils aus dem Imprägnat eine Polymerschicht erzeugt wird, und bei dem in einem zweiten Verfahrensschritt die Polymerschichten mittels einer Klebstoffschicht mit Decklagen verbunden werden.

Somit wird durch den zweistufigen Herstellungsvorgang zwar ein zusätzlicher Klebstoff benötigt, um die Decklagen mit den Polymerschichten zu verbinden, jedoch ist im ersten Herstellungsschritt ein exaktes und unmittelbares Verpressen der Imprägnate unter Anwendung von Druck und Wärmeenergie zur Herstellung der Polymerschichten möglich. Im Ergebnis werden Möbelplatten hergestellt, die höhere Festigkeitseigenschaften aufweisen und somit auch dünner hergestellt sein können. Zudem ist die Herstellung flexibler, da unabhängig vom ersten Verfahrensschritt im zweiten Verfahrensschritt die Decklagen je nach den Anforderungen an die herzustellende Möbelplatte ausgewählt werden können. Die im ersten Schritt erzeugten Zwischenprodukte können also in größeren Mengen vorproduziert werden, um danach wahlweise mit unterschiedlichen Decklagen versehen zu werden. Dadurch wird der größere Aufwand durch zwei Verfahrensschritte insgesamt ausgeglichen.

Durch das erfindungsgemäße Verfahren werden Möbelplatten hergestellt, die möglichst geringe Durchbiegungen von hochbelasteten und/oder langen horizontal ausgerichteten Möbelplatten, insbesondere Böden aufweisen. Die Möbelplatten können in gleicher Weise wie bisherige Tischlerplatten oder Vollholzplatten weiter verarbeitet werden. Die Oberflächen der Decklagen weisen entweder ein fertiges Dekor auf, oder die Oberflächen werden weiter durch Beschichten mit Folien, weiteren Imprägnaten oder Schichtstoffen oder durch Bedrucken oder Lackieren verarbeitet.

Unter einer Polymerschicht wird demnach eine Schicht verstanden, die durch Anwendung von Druck und Wärmeenergie aus einem oder mehreren Imprägnaten bestehend aus einem Trägermaterial und einem Kunstharz hergestellt wird. Die Polymerschicht weist somit nicht nur das polymerisierte Kunstharz, sondern auch das Trägermaterial auf. Als Trägermaterialien kommen Papier, insbesondere Kraftpapier, sowie weitere Flächengebilde wie Vliese, insbesondere Glas- oder Kohlefaservliese, Gewirke, Gewebe oder Filze in Frage.

Der Elastizitätsmodul der fertigen Möbelplatte kann durch Art und Anzahl der zu verpressenden Imprägnate eingestellt werden. Denn die ausgehärteten Polymerschichten wirken als duroplastische und schubfeste Schichten und führen zu einer Versteifung der Möbelplatte im Vergleich zu einer Möbelplatte, die keine Polymerschichten im Plattenaufbau aufweist.

Ein Imprägnat in Form eines kunstharzgetränkten Papiers wird beispielsweise durch eine Papierbahn gebildet, die vor der Anwendung des Verfahrens durch Tränken mit flüssigem Kunstharz und anschließendem Trocknen hergestellt wurde. Kunstharze sind durch Polymerisations-, Polyadditions- oder Polykondensationsreaktionen synthetisch hergestellte Harze und es werden bevorzugt Harnstoff-Formaldehyd (UF-Harz), Melamin-Formaldehyd-Harz (MF-Harz), Phenol-Formaldehyd-Harz (PF-Harz) oder Kombinationen davon eingesetzt. Bei der Trocknung wird das zunächst flüssige Kunstharz in den sogenannten "B-Stage" überführt, in dem es eine gewisse Formstabilität aufweist, aber noch nicht polymerisiert, also nicht vernetzt ist. Die Polymerisation erfolgt erst bei Anwendung des Verfahrens durch Verpressen mit der Kernlage.

Durch das Aufeinanderschichten von mindestens zwei Imprägnaten, die unterschiedliche Trägermaterialien aufweisen und/oder mit unterschiedlichen Kunstharzen imprägniert sind, können die angestrebten Eigenschaften der fertigen Möbelplatte eingestellt werden. Ein Austausch verschieden beharzter Imprägnate ist bei dem vorliegenden Verfahren in einfacher Weise möglich, da die Imprägnate direkt verpresst werden, ohne dass die Press- und Wärmeenergie durch die Decklagen hindurch übertragen werden muss. Eine einfache Anpassung der Pressebedingungen ist durch die direkte Anwendung der Presse auf die Imprägnate möglich.

Des Weiteren können die Decklagen aus einem Holzwerkstoff bestehend aus hochdichter Faserplatte (HDF-Platte), mitteldichter Faserplatte (MDF-Platte) oder aus einer Spanplatte bestehen. Da die Festigkeitseigenschaften der hergestellten Möbelplatte im Wesentlichen durch die Kernlage und die beiden Polymerschichten bewirkt wird, können die beiden Decklagen mit einer geringen Dicke im Bereich von 1 bis 3 mm eingesetzt werden. Bevorzugt beträgt die Dicke zwischen 1 und 2 mm. Durch die Verwendung eines Holzwerkstoffs als Decklagen kann der Verarbeiter sämtliche Beschichtungsverfahren, die er für herkömmliche Möbelplatten anwendet, einsetzen. Ebenso ist es möglich, bereits einseitig beschichtete Holzwerkstoffe als Decklagen einzusetzen, um einen separaten Beschichtungsvorgang einzusparen. Denn während des Verklebens wird die Oberfläche der Decklagen nicht besonderen Bedingungen wie Druck und Temperatur ausgesetzt.

Der bei dem oben beschriebenen Verfahren eingesetzte Klebstoff basiert bevorzugt auf Polyurethan (PU), der eine Komponente, vorzugsweise zwei Komponenten aufweist. Mit so genannten Polyurethanklebstoffen lassen sich bei geringen Presszeiten und bei Raumtemperatur sehr gute Verklebungen hinsichtlich Festigkeit und Dauerhaftigkeit realisieren. Des Weiteren weisen solche Klebstoffe keine Lösemittel oder sonstigen Inhaltsstoffe auf, die nach der Aushärtung des Klebstoffs austreten und ungewünschte Gerüche verursachen. Daneben können aber auch herkömmliche Weißleime auf Polyvinylacetatbasis (PVAC) oder auch Schmelzklebstoffe, beispielsweise auch in Form von Klebstoffvliesen, für die Verklebung der Decklagen mit der Polymerschicht eingesetzt werden.

Eine besonders vorteilhafte Ausgestaltung des beschriebenen Verfahrens besteht darin, dass vor dem ersten Verfahrensschritt die Unterseite und/oder die Oberseite der Kernlage geschliffen werden. Somit erfolgt das Verpressen der Imprägnate mit der Kernlage bereits mit einer ebenen Oberfläche, wodurch insgesamt die Ebenheit der Oberflächen und die Dickentoleranze der fertiggestellten Möbelplatte verbessert werden. Eine Nachbearbeitung durch Schleifen nach der Herstellung kann damit vermieden werden. Somit ist der Aufwand der Weiterverarbeitung der hergestellten Möbelplatte geringer und ein Beschichten, Lackieren oder Bedrucken der Oberflächen der Decklagen ist ohne Vorbereitung durch einen nachgeordneten Schleifvorgang möglich. Die Präzision einer werkseitigen Oberflächenbearbeitung durch Schleifen wird somit bis zur Weiterverarbeitung der Möbelpatte bereitgestellt. Denn die Dickentoleranzen werden durch das Schleifen der Oberfläche der Kernlage bereits eingehalten.

Das Schleifen der Oberfläche der Kernlage hat den weiteren Vorteil, dass die bei der Herstellung der aus einem Holzwerkstoff wie Spanplattenmaterial oder OSB-Material entstehenden Oberflächenunregelmäßigkeiten entfernt werden, die für ein Verpressen mit einem Imprägnat hinderlich sind. Dazu zählt unter anderem auch die sogenannte Presshaut, die sich während des Pressvorgangs aus Harzbestandteilen und Ausgasungen des Spanmaterials oberflächennah ausbildet und die Oberfläche zusätzlich versiegelt. Durch ein Schleifen der Oberfläche wird diese Presshaut zumindest teilweise, vorzugsweise ganz entfernt.

Sofern die Decklagen bereits ein fertiges Dekor aufweisen, ist eine Weiterverarbeitung durch Schleifen nicht gewollt und die Möbelplatte hat eine verbesserte Oberflächenebenheit durch das beschriebene Verfahren.

Eine mittels des beschriebenen Verfahrens hergestellte Möbelplatte dadurch gekennzeichnet, dass jeweils zwischen den Polymerschichten und den Decklagen eine Klebstoffschicht angeordnet ist.

Die Eigenschaften und damit verbundenen Vorteile der verschiedenen Merkmale der Möbelplatte ergeben sich aus der vorigen Beschreibung des Verfahrens.

Im Folgenden wird die Erfindung anhand von Ausführungsbeispielen mit Bezug auf die Zeichnung erläutert. In der Zeichnung zeigen
- Fig. 1: den Schichtaufbau einer ersten erfindungsgemäßen Möbelplatte und
- Fig. 2: den Schichtaufbau einer zweiten erfindungsgemäßen Möbelplatte.

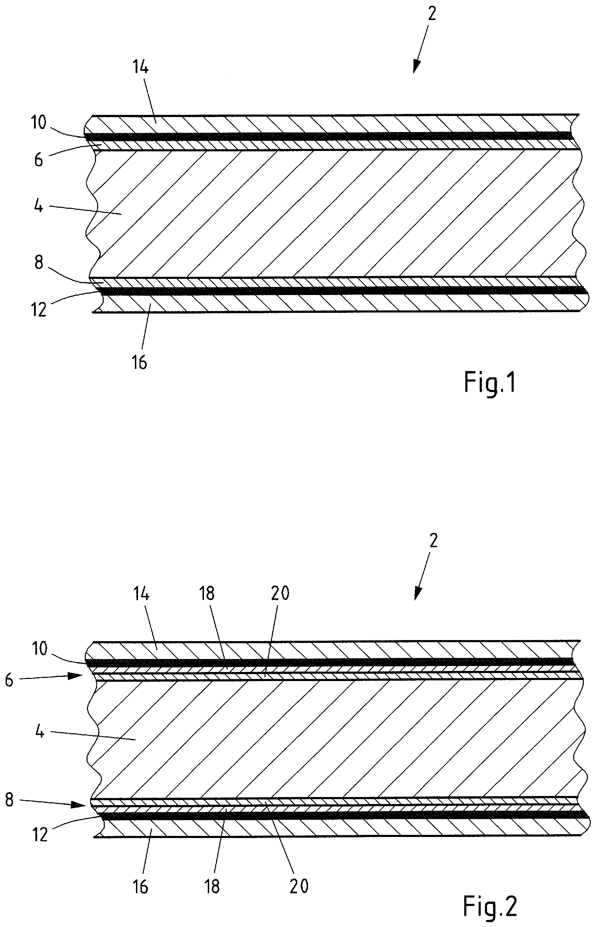

Fig. 1 zeigt eine erfindungsgemäße Möbelplatte 2 mit einem nachfolgend beschriebenen Schichtaufbau. Mittig ist eine Kernlage 4 bestehend aus einem OSB-Material angeordnet, deren Ober- und Unterseite vor der Weiterverarbeitung abgeschliffen worden sind und somit zum größten Teil keine Presshaut und keine anderen durch die Herstellung der OSB-Platte auftretenden Unregelmäßigkeiten mehr aufweist.

Auf den Ober- und Unterseiten der Kernlage 4 sind Polymerschichten 6 und 8 ausgebildet, die in einem ersten Verfahrensschritt jeweils aus einem Imprägnat hergestellt worden sind. Die als Vorprodukte aufgebrachten Imprägnate bestehen aus einem melaminharzgetränkten Kraftpapier, das durch Anwendung von Druck und Wärme über einen vorgegebenen Zeitraum mittels einer Kurztaktpresse mit der Kernlage 4 verbunden und zu einer Polymerschicht polymerisiert und ausgehärtet worden ist. Der Verbund aus Kernlage 4 und Polymerschichten 6 und 8 stellt eine stabile Einheit dar, die gegebenenfalls auch zwischengelagert werden kann, bevor der zweite Verfahrensschritt ausgeführt wird.

Im zweiten Verfahrensschritt werden mittels der Klebstoffschichten 10 und 12 zwei Decklagen 14 und 16 mit den Polymerschichten 6 und 8 verbunden, wobei die Decklagen 14 und 16 während des Aushärtens des Klebstoffs unter Druck gesetzt werden. Dadurch wird eine stabile und dauerhafte Verklebung gewährleistet. Der Klebstoff besteht bei diesem Ausführungsbeispiel aus einem zweikomponentigen Polyurethanklebstoff (PU). Die beiden Klebstoffkomponenten werden unmittelbar vor deren Verarbeitung gemischt und mittels mehrerer Schleuderteller auf die entsprechende Seite der Decklage aufgebracht. Je nach eingesetztem Klebstoff können auch andere Auftragsverfahren wie beispielsweise Walz- oder Gießauftrag, oder auch ein beidseitiger Klebstoffauftrag vorgesehen werden.

Insgesamt stellt die Möbelplatte 2 entweder ein Endprodukt dar, dessen Decklagen 14 und 16 bereits ein entweder einfarbiges oder mehrfarbiges Dekor aufweisen, oder dessen Decklagen 14 und 16 noch vor einem Einsatz in einem Möbelstück weiter verarbeitet werden. Dazu können die Decklagen entweder beschichtet, bedruckt oder lackiert werden.

Fig. 2 zeigt ein zweites Ausführungsbeispiel einer erfindungsgemäßen Möbelplatte 2, die im Unterschied zum ersten Ausführungsbeispiel Polymerschichten 6 und 8 aufweist, die aus jeweils zwei Teilschichten 18 und 20 bestehen. Die Teilschichten 18 und 20 können aus zwei verschiedenen Imprägnaten mit verschiedenen Papieren und/oder mit verschiedenen Beharzungen hergestellt sein. Das hat den Vorteil, dass durch unterschiedliche Teilschichten eine verbesserte Stabilität des Schichtenverbunds erreicht werden kann.

Besonders hohe Biegefestigkeiten bei vergleichsweise geringen Möbelplattendicken lassen sich durch den Einsatz von Kohlenstofffaservliesen als Basis für die Imprägnate erzielen. Durch die Einlagerung solcher Faservliese in die Polymermatrix wird diese zusätzlich in ihrer Schubfestigkeit verstärkt, sodass die Biegefestigkeiten und Dauerstandfestigkeiten der fertigen Möbelplatte noch zusätzlich wesentlich erhöht werden können und/oder deren Dicke weiter reduziert werden kann.

## Patentansprüche

1. Verfahren zum Herstellen einer Möbelplatte, insbesondere eines Boden für ein Aufbewahrungsmöbel,
- bei dem in einem ersten Verfahrensschritt eine Kernlage mit jeweils einem auf einer Oberseite und einer Unterseite angeordneten Imprägnat verpresst wird, wodurch jeweils aus dem Imprägnat eine Polymerschicht erzeugt wird, und
- bei dem in einem zweiten Verfahrensschritt die Polymerschichten mittels einer Klebstoffschicht mit Decklagen verbunden werden.

2. Verfahren nach Anspruch 1,
bei dem die Imprägnate jeweils mindestens eine kunstharzgetränkte Papierschicht oder ein kunstharzgetränktes Vlies, insbesondere Glas- oder Kohlefaservlies, Gewirk, Gewebe oder Filz aufweisen.

3. Verfahren nach Anspruch 1 oder 2,
bei dem vor dem ersten Verfahrensschritt die Unterseite und/oder die Oberseite der Kernlage geschliffen werden.

4. Verfahren nach einem der Ansprüche 1 bis 3,
bei dem der Klebstoff unter Anwendung von Druck ausgehärtet wird.

## Claims

1. Method of manufacturing a furniture board, in particular a base for a storage furniture,
- in which, in a first process step, a core layer with an impregnate arranged on a top side and a bottom side is pressed, whereby a polymer layer is produced from each of the impregnates, and
- in which in a second process step, the polymer layers are joined with cover layers by means of an adhesive layer.

2. Procedure according to claim 1,
in which the impregnates each have at least one synthetic resin-impregnated paper layer or a synthetic resin-impregnated nonwoven, in particular glass or carbon fibre nonwoven, knitted fabric, woven fabric or felt.

3. Procedure according to claim 1 or 2,
in which the bottom side and/or the top side of the core layer are sanded before the first process step.

4. Procedure according to one of claims 1 to 3,
in which the adhesive is cured by applying pressure.

## Revendications

1. Procédé de fabrication d'un panneau de meuble, en particulier d'un fond pour un meuble de rangement,
- procédé au cours d'une première étape duquel une couche centrale est comprimée avec un produit d'imprégnation disposé à chaque fois sur un dessus et sur un dessous, faisant qu'une couche de polymère est produite à chaque fois à partir du produit d'imprégnation, et
- procédé au cours d'une seconde étape duquel les couches de polymère sont combinées avec des couches extérieures au moyen d'une couche de colle.

2. Procédé selon la revendication 1,
au cours duquel les produits d'imprégnation présentent à chaque fois au moins une couche de papier imprégné de résine synthétique ou bien un tissu non tissé imprégné de résine synthétique, présentant en particulier un voile de verre ou un mat de fibres de carbone, un tissu tricoté, un tissu tissé ou bien un feutre.

3. Procédé selon la revendication 1 ou 2,
au cours duquel le dessous et/ou le dessus de la couche centrale est poncé avant la première étape du procédé.

4. Procédé selon l'une quelconque des revendications 1 à 3,
au cours duquel la colle est durcie par application d'une pression.
